# EUROPÄISCHE PATENTANMELDUNG

(11) **EP 3 029 829 A1**
(43) Veröffentlichungstag der Anmeldung: **08.06.2016**
(21) Anmeldenummer: 14196554.1
(22) Anmeldetag: 05.12.2014
(51) Int. Cl.: H02P 27/06

(54) **Verfahren zur gemeinsamen Übertragung von Ansteuersignalen und digitalen Datensignalen**

(71) Anmelder: Siemens Aktiengesellschaft, 80333 München (DE)
(72) Erfinder: Ditterich, Jürgen, 90427 Nürnberg (DE); Kleffel, Rüdiger, 91056 Erlangen (DE); Kleindienst, Frank, 08371 Glauchau (DE)

(57) **Zusammenfassung**

Die Erfindung betrifft ein Verfahren zur Übertragung eines Ansteuersignals (3) und eines ersten Datensignals (4) zwischen einer Steuervorrichtung (9) und einer Ansteuervorrichtung (12) einer Leistungshalbleitervorrichtung (13).

Um den Aufwand zum Betrieb der physikalischen Übertragungska-näle und die Kosten für die Verlegung der physikalischen Verbindung zwischen Steuervorrichtung (9) und Ansteuervorrichtung (12) zu minimieren, wird vorgeschlagen, dass die Übertragung des Ansteuersignals (3) und des ersten Datensignals (4) zwischen der Steuervorrichtung (9) und der Ansteuervorrichtung (12) gleichzeitig und über einen gemeinsamen Übertragungskanal stattfindet.

## Beschreibung

Die Erfindung betrifft ein Verfahren zur Übertragung eines Ansteuersignals und eines ersten Datensignals zwischen einer Steuervorrichtung und einer Ansteuervorrichtung einer Leistungshalbleitervorrichtung.

Ferner betrifft die Erfindung eine Anordnung zur Durchführung eines derartigen Verfahrens.

Die Erfindung betrifft weiterhin ein System zur digitalen Übertragung eines Ansteuersignals und eines ersten Datensignals zwischen einer Steuervorrichtung und einer Ansteuervorrichtung einer Leistungshalbleitervorrichtung und zur Übertragung eines Rückmeldesignals zusammen mit einem zweiten Datensignal in Gegenrichtung mit Hilfe des vorgeschlagenen Verfahrens mit mindestens einer derartigen Anordnung.

Ein derartiges Verfahren kommt bei der Ansteuerung von Leistungshalbleitern, insbesondere in Stromrichtern, zum Einsatz. Mögliche Anwendungen sind: Elektrische Antriebe, Windkraftsysteme, Bahnsysteme und Energietechnik. Über die Schnittstelle zwischen Steuervorrichtung und Ansteuervorrichtung sollen zwei verschiedene Arten von Signalen übertragen werden:
- Zeitdeterministische Echtzeitsignale zur Ansteuerung der Leistungshalbleiter und deren Rückmeldung, und
- Datensignale mit Zusatzinformationen, beispielsweise zur Parametrierung, Diagnose und Übermittlung von Messwerten.

Die zeitdeterministischen Echtzeitsignale dürfen in ihrer Form nicht verändert und nur um einen geringen, genau festgelegten Betrag, nämlich die Laufzeit der Übertragungsstrecke, zeitlich verzögert werden.

Beide Informationen dürfen sich nicht gegenseitig beeinflussen. Wegen der hohen zeitlichen Anforderungen bei Schutzeingriffen der Steuervorrichtung oder bei Anwendungen mit hoher Schaltfrequenz der Leistungshalbleitervorrichtung kann und darf die Frequenz der Ansteuer- und Rückmeldesignale höher sein als die Datenübertragungsrate der Zusatzinformation.

Bisher wurden aufgrund der speziellen Signalanforderungen zwei unterschiedliche physikalische Übertragungskanäle eingesetzt. Ein physikalischer Übertragungskanal ist eine Verbindung mit der messtechnisch erfassbare Signale übertragen werden. In diesem Fall sind die beiden unterschiedlichen physikalischen Übertragungskanäle beispielsweise zwei verschiedene Kabel, welche sich nicht gegenseitig beeinflussen. Eine Verbindung über Lichtwellenleiter oder eine drahtlose Verbindung ist ebenfalls ein physikalischer Übertragungskanal. Da sich die Signale auf den beiden Kabeln nicht gegenseitig beeinflussen, findet die Übertragung über zwei unterschiedliche Übertragungskanäle statt.

Die oben beschriebene herkömmliche Lösung für die Übertragung ist mit zusätzlichem Aufwand für den Betrieb zweier unterschiedlicher Übertragungskanäle und Kosten für die Verlegung der physikalischen Verbindungen zwischen Steuervorrichtung und Ansteuervorrichtung verbunden. Die Übermittlung der Ansteuersignale und Rückmeldesignale innerhalb eines Datenprotokolls bekannter Datenschnittstellen, wie beispielsweise Ethernet, Local Operating Network (LON), Controller Area Network (CAN), Universal Serial Bus (USB), ist wegen der zeitdeterministischen Echtzeitanforderungen des Ansteuer- und Rückmeldesignals nicht möglich.

Aus EP 2 371 054 A2 ist ein Umrichter zur Speisung eines Motors bekannt, wobei zwischen einem Steuerelektronikmodul und einem Kopplungsmodul eine erste Schnittstelle zur Signalübermittelung vorgesehen ist und zwischen einem Kopplungsmodul und einem Bremschoppermodul sowie zwischen einem Kopplungsmodul und jedem Phasenmodul jeweils eine zweite Schnittstelle zur Signalübertragung ausgeführt ist.

In DE 10 2011 014 753 A1 wird ein Antriebssystem und Verfahren zum Betreiben eines Antriebssystems offenbart, das zumindest einen Elektromotor aufweist, welcher von einem Umrichter gespeist wird. Am Motor sind zumindest ein Sensor und ein Aktor angeordnet, wobei der Umrichter und der Motor über ein Hybridkabel verbunden sind. Das Hybridkabel weist Starkstromleitungen und Schwachstromleitungen auf, wobei als Schwachstromleitungen mindestens zwei Signalleitungen und zwei Versorgungsleitungen verwendet werden. Über die Signalleitungen sind die von den Sensoren erfassten Werte und, insbesondere zeitlich versetzt, die für den Aktor bestimmten Ansteuerdaten übertragbar.

Der Erfindung liegt die Aufgabe zugrunde, ein Verfahren der eingangs genannten Art anzugeben, bei dem der Aufwand zum Betrieb der physikalischen Übertragungskanäle und die Kosten für die Verlegung der physikalischen Verbindung zwischen Steuervorrichtung und Ansteuervorrichtung minimiert sind.

Diese Aufgabe wird erfindungsgemäß durch ein Verfahren der eingangs genannten Art dadurch gelöst, dass die Übertragung des Ansteuersignals und des ersten Datensignals gleichzeitig und über einen gemeinsamen Übertragungskanal stattfindet.

Weiterhin wird die Aufgabe erfindungsgemäß durch eine Anordnung zur Durchführung eines derartigen Verfahrens gelöst.

Ferner wird die Aufgabe erfindungsgemäß durch ein System zur digitalen Übertragung eines Ansteuersignals und eines ersten Datensignals zwischen einer Steuervorrichtung und einer Ansteuervorrichtung einer Leistungshalbleitervorrichtung und zur digitalen Übertragung eines Rückmeldesignals zusammen mit einem zweiten Datensignal in der Gegenrichtung mit mindestens einer derartigen Anordnung gelöst.

Die Übertragung des Ansteuersignals und des ersten Datensignals erfolgt über einen gemeinsamen physikalischen Übertragungskanal. Dies kann beispielsweise ein Kabel aber auch ein Lichtwellenleiter sein. Da die zeitdeterministischen Echtzeitforderungen für das Ansteuersignal eingehalten werden müssen, muss die Übertragung gleichzeitig erfolgen. Diese Anforderung wird beispielsweise von einem konventionellen Zeitmultiplex-Verfahren nicht erfüllt, bei dem in unterschiedlichen Zeitintervallen verschiedene Signale unabhängig voneinander übertragen werden.

Die Vorteile der Erfindung zeigen sich beispielsweise bei einer Kabelverbindung darin, dass je ein Kabel bei der Übertragung des Ansteuersignals, welches beispielsweise ein Schaltsignal sein kann, zusammen mit dem ersten Datensignal, sowie bei der Übertragung des Rückmeldesignals zusammen mit dem zweiten Datensignal, wegfällt und sich der Aufwand zum Betrieb der Schnittstellen entsprechend minimiert. Die Kosten für die Verlegung der Kabel zwischen Steuervorrichtung und Ansteuervorrichtung verringern sich ebenfalls. Ein weiterer Vorteil ist, dass sich die Anzahl der mechanischen Fehlerquellen durch die Reduzierung der Anzahl benötigter Steckverbindungen gegenüber dem Stand der Technik verringert und ein Übersprechen zwischen Ansteuersignal und erstem Datensignal bzw. zwischen Rückmelde- und zweitem Datensignal prinzipbedingt entfällt.

Bei einer bevorzugten Ausführungsform wird zusätzlich ein Rückmeldesignal zusammen mit einem zweiten Datensignal in der Gegenrichtung übertragen. Ein Rückmeldesignal kann beispielsweise von einem Überwachungssensor, welcher eine Leistungshalbleitervorrichtung überwacht, erzeugt werden. Ein Vorteil dieser Ausführungsform besteht darin, dass für die Übertragung der Zusatzinformation kein zusätzlicher physikalischer Übertragungskanal benötigt wird und sich sowohl der Aufwand als auch die Kosten im Vergleich zu einer separaten Übertragung des Rückmeldesignals und des zweiten Datensignals deutlich reduzieren.

In einer vorteilhaften Ausgestaltung werden das erste Datensignal mit dem Ansteuersignal und/oder das zweite Datensignal mit dem Rückmeldesignal insbesondere über ein digitales Modulationsverfahren oder Codierungsverfahren kombiniert. Eine derartige Verknüpfung kann beispielweise durch einen Mischvorgang durchgeführt werden. Die Information wird empfangsseitig durch einen Demodulator oder Decoder vollständig zurückgewonnen.

In besonders vorteilhafter Weise werden das Ansteuersignal mit einer höheren Datenrate als das erste Datensignal und/oder das Rückmeldesignal mit einer höheren Datenrate als das zweite Datensignal übertragen. Hierbei ist die Codierungslänge bevorzugt kleiner als die Intervalllänge, wobei der Übertragungszeitraum mindestens zwei Intervalllängen umfasst. Dies hat den Vorteil, dass die zeitdeterministischen Echtzeitforderungen für das Ansteuersignal und das Rückmeldesignal eingehalten werden.

Bei einer bevorzugten Ausführungsform wird eine Codierungslänge für das erste Datensignal verwendet, die kürzer als die Intervalllänge des Ansteuersignals ist und/oder eine Codierungslänge für das zweite Datensignal verwendet, die kürzer als die Intervalllänge des Rückmeldesignals ist. Hierbei beschreibt die Codierungslänge die Länge eines Bits des ersten oder zweiten Datensignals.

Da die Änderung der Ansteuersignale und Rückmeldesignale nur zu diskreten Zeitpunkten erfolgen kann, entsteht eine konstante Intervalllänge für das Ansteuersignal und das Rückmeldesignal, wobei innerhalb des Intervalls keine Änderungen erfolgen. Dies ist besonders vorteilhaft, da sich das Ansteuersignal und das Rückmeldesignal vollständig und unverfälscht rekonstruieren lassen.

Der Übertragungszeitraum besteht aus mindestens zwei Intervalllängen.

In einer vorteilhaften Ausgestaltung werden das erste Datensignal mit einem Ansteuersignal und/oder das zweite Datensignal mit einem Rückmeldesignal unter Verwendung einer XOR-Verknüpfung oder eine XNOR-Verknüpfung kombiniert.

Bei einer XOR- beziehungsweise XNOR-Verknüpfung werden innerhalb der Codierungslänge ein Ansteuersignal mit einem ersten Datensignal und ein Rückmeldesignal mit einem zweiten Datensignal durch eine XOR-Verknüpfung oder XNOR- Verknüpfung logisch miteinander verknüpft. Dies hat den Vorteil, dass eine derartige logische Verknüpfung mit Hilfe eines entsprechenden Gatters einfach, leistungseffizient und kostengünstig zu realisieren ist.

In besonders vorteilhafter Weise wird das Datensignal mit Hilfe einer Pulsphasencodierung und/oder Pulsweitencodierung insbesondere durch Invertierung codiert.

Bei einer Pulsphasencodierung oder Pulsphasenmodulation, kurz PPM, oder auch Pulspositionscodierung, wird innerhalb des Übertragungszeitraums in Abhängigkeit vom Wert des ersten Datensignals beziehungsweise zweiten Datensignals die Codierungslänge an unterschiedlichen Codierungszeitpunkten eingefügt. Innerhalb der Codierungslänge werden das Ansteuersignal beziehungsweise das Rückmeldesignal invertiert.

Bei der Pulsweitencodierung oder Pulsweitenmodulation, welche auch Pulslängenmodulation oder Pulsbreitenmodulation genannt wird, wird innerhalb des Übertragungszeitraums in Abhängigkeit vom Wert des ersten Datensignals beziehungsweise zweiten Datensignals die Codierungslänge verändert. Innerhalb der Codierungslänge werden das Ansteuersignal beziehungsweise das Rückmeldesignal invertiert.

Beliebige Kombinationen der Codierungsvarianten sind möglich. Damit lassen sich mehrwertige erste bzw. zweite Datensignale und/oder mehrere erste bzw. zweite Datensignale codieren.

In einer bevorzugten Ausführungsform werden mehrere erste Datensignale mit einem Ansteuersignal und/oder mehrere zweite Datensignale mit einem Rückmeldesignal kombiniert. Diese Datensignale können voneinander abhängig oder unabhängig sein. Abhängige Datensignale haben den Vorteil, dass eine mehrwertige Information übertragen werden kann. Unabhänginge Datensignale haben den Vorteil, dass Zusatzinformationen aus mehreren Datenquellen gleichzeitig übertragen werden können.

In einer vorteilhaften Ausgestaltung wird aus den Datensignalen mehrerer Übertragungszeiträume ein Datenprotokoll gebildet. Ein Übertragungszeitraum ist die Verbindung mehrerer Intervalle für die Übertragung einer oder mehrerer digitaler Informationen. Die Verwendung eines Datenprotokolls erhöht die Zuverlässigkeit der Verbindung, da anhand des Protokolls feststellbar ist ob die gesamte Information angekommen ist und ob Fehler vorliegen.

In einer bevorzugten Ausführungsform weist die Anordnung einen Sender, einen Übertragungskanal und einen Empfänger auf. Diese Anordnung ist vorteilhaft, da für die Übertragung der Zusatzinformation keine zusätzliche Schnittstelle benötigt wird und sich sowohl der Aufwand als auch die Kosten im Vergleich zu einer separaten physikalischen Schnittstelle deutlich reduzieren.

In einer weiteren Ausgestaltung weist der Sender eine Mischervorrichtung auf, welche zur Kombination des Ansteuersignals mit mindestens einem ersten Datensignal oder des Rückmeldesignals mit mindestens einem zweiten Datensignal vorgesehen ist. Dies ist besonders vorteilhaft weil diese Architektur einfach und günstig in Hardware zu implementieren ist.

In einer besonders vorteilhaften Ausführungsform weist der Empfänger eine Vorrichtung, welche zur Erkennung eines Synchronisationszeitpunkts vorgesehen ist, mindestens eine Biterkennungseinheit, welche zur Zurückgewinnung und Ausgabe des Datensignals vorgesehen ist, eine Ansteuererkennungseinheit, welche zur Zurückgewinnung und Ausgabe des Ansteuersignals oder des Rückmeldesignals vorgesehen ist und eine Phasenregelschleife, welche zur Bereitstellung eines Referenzzeitpunkts für die Ansteuererkennungseinheit und die Biterkennungseinheit vorgesehen ist, auf. Diese Implementierung hat den Vorteil, dass der Empfänger sich nur mit Hilfe des codierten Signals auf den Sender synchronisieren kann und damit eine zusätzliche Synchronisationsleitung entfällt.

Im Folgenden wird die Erfindung anhand der in den Figuren dargestellten Ausführungsbeispiele näher beschrieben und erläutert. Es zeigen:
- FIG 1: eine schematische Darstellung eines Systems zur Ansteuerung einer Leistungshalbleitervorrichtung,
- FIG 2: eine schematische Darstellung eines Senders,
- FIG 3: eine schematische Darstellung eines Empfängers,
- FIG 4: ein Zeitablaufdiagramm für die Codierung eines uncodierten Ansteuersignals oder Rückmeldesignals mit je einem Datensignal mittels XOR-Verknüpfung,
- FIG 5: ein Zeitablaufdiagramm für die Codierung eines uncodierten Ansteuersignals oder Rückmeldesignals mit je einem Datensignal mittels Pulsphasencodierung, und
- FIG 6: ein Zeitablaufdiagramm für die Codierung eines uncodierten Ansteuersignals oder Rückmeldesignals mit je einem Datensignal mittels Pulsweitencodierung.

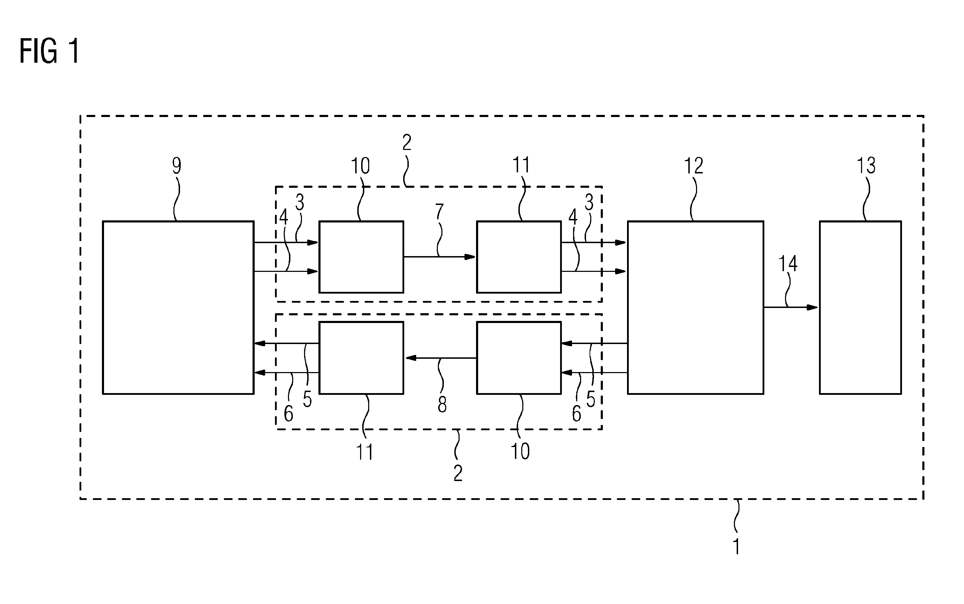

FIG 1 zeigt eine schematische Darstellung eines Systems 1 zur Ansteuerung einer Leistungshalbleitervorrichtung 13, welche eine Steuervorrichtung 9, eine Ansteuervorrichtung 12, eine Leistungshalbleitervorrichtung 13 sowie zwei Anordnungen 2 zur Codierung eines Ansteuersignals 3 oder eines Rückmeldesignals 6 mit je einem Datensignal 4, 5 aufweist. Jede Anordnung besteht aus einem Sender 10 und einem Empfänger 11. Das Ansteuersignal 3 und das erste Datensignal 4 werden von der Steuervorrichtung 9 generiert und vom Sender 10 zu einem ersten codierten Signal 7 kombiniert. Aus diesem Signal 7 wird vom Empfänger 11 das Ansteuersignal 3 und das das erste Datensignal 4 rekonstruiert. Mit Hilfe der Ansteuervorrichtung 12 wird der Leistungshalbleitervorrichtung 13 das Ansteuersignal 14 zugeführt. Das Rückmeldesignal 6 der Ansteuervorrichtung 12 der Leistungshalbleitervorrichtung 13 wird zusammen mit einem zweiten Datensignal 5 von einem Sender 10 zu einem zweiten codierten Signal 8 kombiniert. Aus diesem Signal 8 wird vom Empfänger 11 das Rückmeldesignal 6 und das zweite Datensignal 5 rekonstruiert und an die Steuervorrichtung zur weiteren Verarbeitung zurückgeleitet.

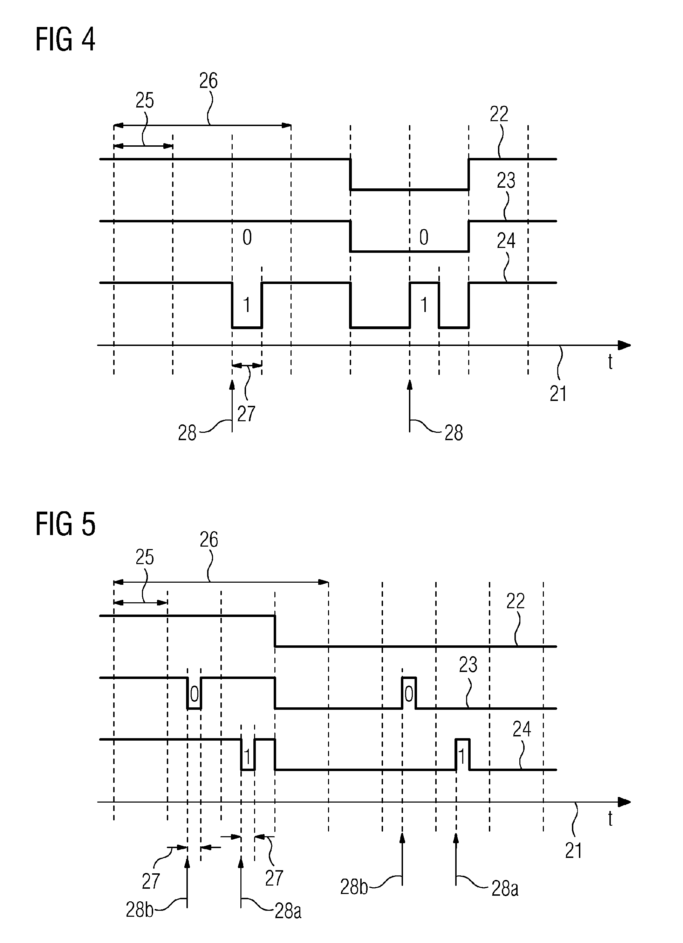

Zur Modulation oder Mischung der Signale 3, 4, 5, 6 können in diesem Verfahren folgende Modulationsvarianten oder Codierungsvarianten herangezogen werden, vergleiche hierzu FIG 4 bis 6: Eine XOR- bzw. XNOR-Verknüpfung, eine Pulsphasencodierung und eine Pulsweitencodierung. Für alle drei Codierungsvarianten gilt:
- Die Codierungslänge 27, 27a, 27b ist kleiner als die Intervalllänge 25.
- Der Übertragungszeitraum 26 besteht aus mindestens zwei Intervalllängen 25.

Bei einer XOR- beziehungsweise XNOR-Verknüpfung werden innerhalb der Codierungslänge 27 ein Ansteuersignal 3 mit einem ersten Datensignal 4 und ein Rückmeldesignal 6 mit einem zweiten Datensignal 5 durch eine XOR-Verknüpfung oder XNOR-Verknüpfung logisch miteinander verknüpft.

Bei einer Pulsphasencodierung wird innerhalb des Übertragungszeitraums in Abhängigkeit vom Wert des ersten Datensignals 4 beziehungsweise zweiten Datensignals 5 die Codierungslänge 27 an unterschiedlichen Codierungszeitpunkten 28a, 28b eingefügt. Innerhalb der Codierungslänge 27 werden das Ansteuersignal 3 beziehungsweise das Rückmeldesignal 6 invertiert.

Bei einer Pulsweitencodierung wird innerhalb des Übertragungszeitraums in Abhängigkeit vom Wert des ersten Datensignals 4 beziehungsweise zweiten Datensignals 5 die Codierungslänge 27a, 27b verändert. Innerhalb der Codierungslänge werden das Ansteuersignal 3 beziehungsweise das Rückmeldesignal 6 invertiert.

Beliebige Kombinationen der Codierungsvarianten sind möglich. Damit lassen sich mehrwertige erste bzw. zweite Datensignale und/oder mehrere erste bzw. zweite Datensignale codieren.

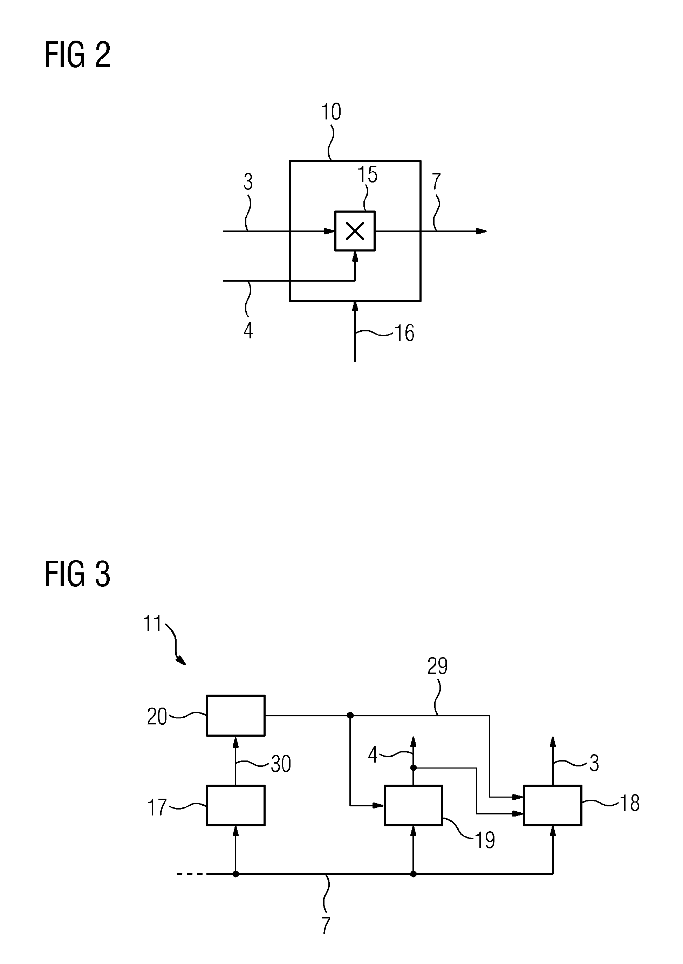

FIG 2 zeigt eine schematische Darstellung eines Senders 10, welcher eine Mischervorrichtung 15 aufweist. Exemplarisch wird die Codierung des ersten codierten Signals 7 aus einem Ansteuersignal 3 und einem ersten Datensignal 4 dargestellt. Dabei werden ein Ansteuersignal 3 und ein erstes Datensignal 4 der Mischervorrichtung 15 zugeführt und zu einem ersten codierten Signal 7 kombiniert. Außerdem wird ein Referenztakt 16 zugeführt.

Die Generierung des zweiten codierten Signals 8 aus dem Rückmeldesignal 6 und dem zweiten Datensignal 5 erfolgt auf gleiche Weise.

In FIG 3 ist eine schematische Darstellung eines Empfängers 11 abgebildet. Im Empfänger werden aus einem codierten Signal 7, 8 das Ansteuersignal 3 beziehungsweise das Rückmeldesignal 6 und ein Datensignal 4, 5 gewonnen. Hierzu wird das codierte Signal 7, 8 abgetastet und verarbeitet.

Der Empfänger setzt sich aus einer Vorrichtung zur Erkennung des Synchronisationszeitpunktes 17, einer Phasenregelschleife 20, einer Ansteuererkennungseinheit 18 und einer Biterkennungseinheit 19 zusammen.

Exemplarisch wird die Rekonstruktion des Ansteuersignals 3 und des ersten Datensignals 4 aus dem ersten codierten Signal 7 dargestellt. Das erste codierte Signal 7 wird gleichzeitig der Vorrichtung zur Erkennung des Synchronisationszeitpunktes 17, der Ansteuererkennungseinheit 18 und der Biterkennungseinheit 19 zugeführt. Von der Vorrichtung zur Erkennung des Synchronisationszeitpunktes 17 wird ein geeigneter Synchronisationszeitpunkt 30 detektiert, der eine Phasenregelschleife 20 speist. Das Ausgangssignal der Phasenregelschleife 20 liefert für die Ansteuererkennungseinheit 18 und die Biterkennungseinheit 19 einen Referenzzeitpunkt 29. Exemplarisch werden durch die Ansteuererkennungseinheit 18 aus dem ersten codierten Signal 7 das Ansteuersignal 3 und aus der Biterkennungseinheit 19 das erste Datensignal 4 zurückgewonnen.

Die Rekonstruktion des Rückmeldesignals 6 und des zweiten Datensignals 5 aus dem zweiten codierten Signal 8 erfolgt auf gleiche Weise.

In FIG 4 ist ein Zeitablaufdiagramm für die Codierung eines uncodierten Ansteuersignals oder Rückmeldesignals 22 mit je einem Datensignal mittels XOR-Verknüpfung dargestellt. Entlang der Zeitachse 21 verläuft das uncodierte Ansteuersignal oder Rückmeldesignal 22, welches in mehrere Intervalle 25 innerhalb eines Übertragungszeitraumes 26 aufgeteilt wird. Die Zusatzinformation wird für die Werte "0" oder "1" zu gleichen Zeitpunkten im Übertragungszeitraum durch XOR-Verknüpfung codiert. Alternativ kann die Codierung mit einer XNOR-Verknüpfung erfolgen. Entsprechend der Wahrheitstabelle der XOR-Verknüpfung ändert sich der Signalverlauf bei Codierung mit "0" 23 zum Codierungszeitpunkt 28 nicht. Der Signalverlauf bei Codierung mit "1" 24 hingegen wird zum Codierungszeitpunkt 28 für eine konstante Codierungslänge 27 invertiert.

FIG 5 zeigt ein Zeitablaufdiagramm für die Codierung eines uncodierten Ansteuersignals oder Rückmeldesignals 22 mit je einem Datensignal mittels Pulsphasenmodulation oder auch Pulsphasencodierung genannt. Bei dieser Codierungsvariante wird der Codierungszeitpunkt 28 variiert während die Codierungslänge 27 konstant bleibt. Der Signalverlauf bei einer Codierung mit "0" 23 wird zum Codierungszeitpunkt für "0" 28b für eine Codierungslänge 27 invertiert, der Signalverlauf bei einer Codierung mit "1" 24 wird zum Codierungszeitpunkt für "1" 28a für dieselbe Codierungslänge 27 invertiert.

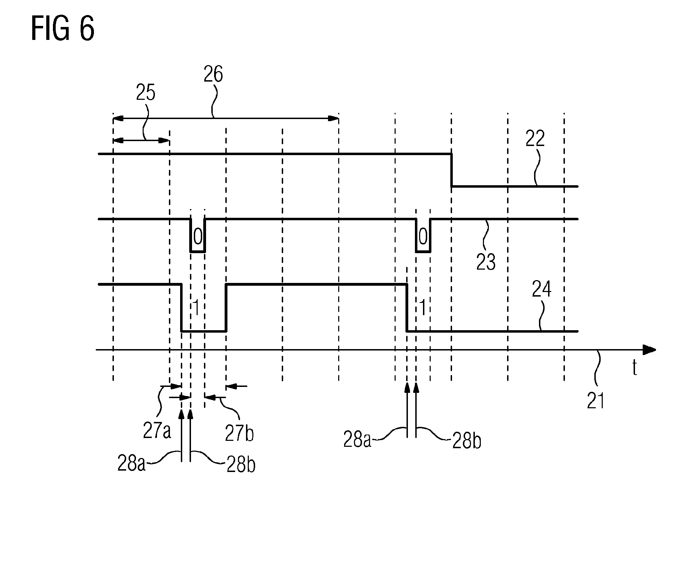

FIG 6 zeigt ein Zeitablaufdiagramm für die Codierung eines uncodierten Ansteuersignals oder Rückmeldesignals 22 mit je einem Datensignal mittels Pulsweitenmodulation oder auch Pulsweitencodierung genannt. Bei dieser Codierungsvariante wird der Signalverlauf zum Codierungszeitpunkt 28 in jedem Fall invertiert. Der Signalverlauf bei Codierung mit "0" 23 und der Signalverlauf bei Codierung mit "1" 24 unterscheiden sich in der Codierungslänge 27. Optional kann zusätzlich der Codierungszeitpunkt 28 variiert werden. Der Signalverlauf bei Codierung mit "0" 23 wird zum Codierungszeitpunkt für "0" 28b für die Codierungslänge für "0" 27b invertiert, der Signalverlauf bei Codierung mit "1" 24 wird zum Codierungszeitpunkt für "1" 28a für die Codierungslänge für "1" 27a invertiert.

Zusammenfassend betrifft die Erfindung ein Verfahren zur Übertragung eines Ansteuersignals 3 und eines ersten Datensignals 4 zwischen einer Steuervorrichtung 9 und einer Ansteuervorrichtung 12 einer Leistungshalbleitervorrichtung 13. Um den Aufwand zum Betrieb der physikalischen Übertragungskanäle und die Kosten für die Verlegung der physikalischen Verbindung zwischen Steuervorrichtung 9 und Ansteuervorrichtung 12 zu minimieren, wird vorgeschlagen, dass die Übertragung des Ansteuersignals 3 und des ersten Datensignals 4 gleichzeitig und über einen gemeinsamen Übertragungskanal stattfindet.

## Patentansprüche

1. Verfahren zur Übertragung eines Ansteuersignals (3) und eines ersten Datensignals (4) zwischen einer Steuervorrichtung (9) und einer Ansteuervorrichtung (12) einer Leistungshalbleitervorrichtung (13),
**dadurch gekennzeichnet, dass** die Übertragung des Ansteuersignals (3) und des ersten Datensignals (4) zwischen der Steuervorrichtung (9) und der Ansteuervorrichtung (12) gleichzeitig und über einen gemeinsamen Übertragungskanal stattfindet.

2. Verfahren nach Anspruch 1,
**dadurch gekennzeichnet, dass** ein Rückmeldesignal (6) gemeinsam mit einem zweiten Datensignal (5) in der Gegenrichtung übertragen wird.

3. Verfahren nach einem der vorherigen Ansprüche,
**dadurch gekennzeichnet, dass** das erste Datensignal (4) mit dem Ansteuersignal (3) und/oder das zweite Datensignal (5) mit dem Rückmeldesignal (6) insbesondere über ein digitales Modulationsverfahren oder Codierungsverfahren kombiniert werden.

4. Verfahren nach einem der vorherigen Ansprüche,
**dadurch gekennzeichnet, dass** das Ansteuersignal (3) mit einer höheren Datenrate als das erste Datensignal (4) und/oder das Rückmeldesignal (6) mit einer höheren Datenrate als das zweite Datensignal (5) übertragen werden.

5. Verfahren nach einem der vorherigen Ansprüche,
**dadurch gekennzeichnet, dass** eine Codierungslänge (27) für das erste Datensignal (4) verwendet wird, die kürzer als die Intervalllänge (25) des Ansteuersignals (3) ist und/oder eine Codierungslänge (27) für das zweite Datensignal (5) verwendet wird, die kürzer als die Intervalllänge (25) des Rückmeldesignals (6) ist.

6. Verfahren nach einem der vorherigen Ansprüche,
**dadurch gekennzeichnet, dass** das erste Datensignal (4) mit einem Ansteuersignal (3) und/oder das zweite Datensignal (5) mit einem Rückmeldesignal (6) unter Verwendung einer XOR-Verknüpfung oder einer XNOR-Verknüpfung kombiniert werden.

7. Verfahren nach einem der vorherigen Ansprüche,
**dadurch gekennzeichnet, dass** das Datensignal (4, 5) mit Hilfe einer Pulsphasencodierung und/oder Pulsweitencodierung insbesondere durch Invertierung, codiert wird.

8. Verfahren nach einem der vorherigen Ansprüche,
**dadurch gekennzeichnet, dass** mehrere erste Datensignale (4) mit einem Ansteuersignal (3) und/oder mehrere zweite Datensignale (5) mit einem Rückmeldesignal (6) kombiniert werden.

9. Verfahren nach einem der vorherigen Ansprüche,
**dadurch gekennzeichnet, dass** mindestens ein mehrwertiges erstes Datensignal (4) mit mindestens einem Ansteuersignal (3) und/oder mindestens ein mehrwertiges zweites Datensignal (5) mit mindestens einem Rückmeldesignal (6) kombiniert wird.

10. Verfahren nach einem der vorherigen Ansprüche,
**dadurch gekennzeichnet, dass** digitale Informationen und/oder Datenprotokolle übertragen werden.

11. Anordnung zur Durchführung eines Verfahrens nach einem der Ansprüche 1 bis 10.

12. Anordnung nach Anspruch 11,
wobei die Anordnung einen Sender, einen Übertragungskanal und einen Empfänger aufweist.

13. Anordnung nach einem der Ansprüche 11 oder 12,
wobei der Sender eine Mischervorrichtung (15) aufweist, welche zur Kombination des Ansteuersignals (3) mit mindestens einem ersten Datensignal (4) oder des Rückmeldesignals (6) mit mindestens einem zweiten Datensignal (5) vorgesehen ist.

14. Anordnung nach einem der Ansprüche 11 bis 13,
wobei der Empfänger folgendes aufweist:
- eine Vorrichtung, welche zur Erkennung eines Synchronisationszeitpunkts (17) vorgesehen ist,
- mindesten eine Biterkennungseinheit (19), welche zur Zurückgewinnung und Ausgabe des Datensignals (4,5) vorgesehen ist,
- eine Ansteuererkennungseinheit (18), welche zur Zurückgewinnung und Ausgabe des Ansteuersignals (3) oder des Rückmeldesignals (6) vorgesehen ist, und
- eine Phasenregelschleife (20), welche zur Bereitstellung eines Referenzzeitpunkts (29) für die Biterkennungseinheit (19) und die Ansteuererkennungseinheit (18) vorgesehen ist.

15. System zur insbesondere digitalen Übertragung mindestens eines Ansteuersignals (3) und mindestens eines ersten Datensignals (4) zwischen einer Steuervorrichtung (9) und einer Ansteuervorrichtung (12) einer Leistungshalbleitervorrichtung (13) und zur digitalen Übertragung mindestens eines Rückmeldesignals (6) zusammen mit mindestens einem zweiten Datensignal (5) in der Gegenrichtung mit mindestens einer Anordnung nach einem der Ansprüche 11 bis 14.

16. System nach Anspruch 15,
wobei die Leistungshalbleitervorrichtung (13) mindestens einen Stromrichter aufweist.

17. Fahrzeug mit mindestens einem System nach Anspruch 15 oder 16.
